# EUROPÄISCHE PATENTSCHRIFT

(11) **EP 3 021 190 B1**
(45) Veröffentlichungstag und Bekanntmachung des Hinweises auf die Patenterteilung: **22.09.2021**
(21) Anmeldenummer: 15189872.3
(22) Anmeldetag: 15.10.2015
(51) Int. Cl.: G05G 25/04, G05G 1/08

(54) **GASKOCHSTELLE UND KOCHFELDANORDNUNG**
GAS COOKING EQUIPMENT AND HOTPLATE ASSEMBLY
PLAQUE DE CUISSON AU GAZ ET SYSTEME DE PLAQUE DE CUISSON

(30) Priorität: 07.11.2014 ES 201431634
(43) Veröffentlichungstag der Anmeldung: 18.05.2016
(73) Patentinhaber: BSH Hausgeräte GmbH, 81739 München (DE)
(72) Erfinder: Gutierrez Humara, Melca, 39650 La Penilla (ES); Placer Maruri, Emilio, 39120 Liencres (ES)

(56) Entgegenhaltungen:
- EP-A1- 0 797 052
- EP-A1- 1 541 928
- WO-A1-2014/155269
- WO-A2-2014/016114
- US-A- 4 837 413

## Beschreibung

Die vorliegende Erfindung betrifft eine Gaskochstelle und eine Kochfeldanordnung.

Eine Gaskochstelle kann einen Gasbrenner und ein Gasventil aufweisen, das dazu eingerichtet ist, einen Brenngasstrom von einer Hauptgasleitung der Gaskochstelle hin zu dem Gasbrenner zu regeln. Das Gasventil kann mit Hilfe eines an einer Betätigungswelle des Gasventils drehfest angebrachten Bedienknopfs betätigt werden. Zwischen dem Bedienknopf und einem Verblendelement der Gaskochstelle kann eine Dichteinrichtung vorgesehen sein. Die WO 2006/128790 A1 beschreibt eine derartige Dichteinrichtung. Beim axialen Verlagern des Betätigungsknopfs in Richtung des Verblendelements wird die Dichteinrichtung elastisch verformt.

Die WO 2014/155269 A1, die als naheliegendster Stand der Technik betrachte wird, zeigt eine Gaskochstelle mit einem Verblendelement, einem Bedienelement, das mit einer Betätigungswelle eines Gasventils drehfest verbunden ist, und einem Dichtelement, das zwischen dem Bedienelement und dem Verblendelement angeordnet ist.

Die US 4,837,413 A beschreibt einen elektronischen Drehschalter.

Die WO 2014/016114 A2 zeigt eine Gaskochstelle mit einem Dichtelement, das zwischen einem Verblendelement und einem Bedienelement der Gaskochstelle angeordnet ist.

Vor diesem Hintergrund besteht eine Aufgabe der vorliegenden Erfindung darin, eine verbesserte Gaskochstelle zur Verfügung zu stellen.

Demgemäß wird eine Gaskochstelle mit einem Gasventil, einem mit einer Betätigungswelle des Gasventils drehfest verbundenen Bedienelement zum Betätigen des Gasventils und einer Dichteinrichtung vorgeschlagen. Die Dichteinrichtung ist zwischen dem Bedienelement und einem Verblendelement der Gaskochstelle angeordnet, wobei die Dichteinrichtung ein erstes Dichtelement, das mit dem Verblendelement verbunden ist, und ein zweites Dichtelement, das mit dem Bedienelement verbunden ist, umfasst, wobei das erste Dichtelement in das zweite Dichtelement eingesteckt ist, wobei sich beim Verdrehen des Bedienelements das zweite Dichtelement relativ zu dem ersten Dichtelement bewegt, wobei das erste Dichtelement und das zweite Dichtelement elastisch verformbar sind, und wobei das erste Dichtelement so in das zweite Dichtelement eingesteckt ist, dass das erste Dichtelement das zweite Dichtelement umfänglich berührt.

Dadurch, dass das erste Dichtelement in das zweite Dichtelement eingesteckt ist, wird zuverlässig verhindert, dass zwischen dem Verblendelement und dem Bedienelement bzw. zwischen dem Bedienelement und der Dichteinrichtung Flüssigkeit oder Kochgut in das Innere der Gaskochstelle gelangen kann. Das Bedienelement kann die Dichteinrichtung umfassen. Das Verblendelement kann Teil eines Gehäuses der Gaskochstelle, einer Kochfeldanordnung oder eines Gasherds sein.

Das erste Dichtelement und das zweite Dichtelement sind elastisch verformbar. Insbesondere sind die Dichtelemente federelastisch verformbar. In einer alternativen Ausführungsform kann auch lediglich das erste Dichtelement elastisch verformbar sein. Vorzugsweise sind die Dichtelemente aus einem elastisch verformbaren Kunststoffmaterial gefertigt. Das erste Dichtelement ist so in das zweite Dichtelement eingesteckt, dass das erste Dichtelement das zweite Dichtelement umfänglich berührt.

Vorzugsweise ist das erste Dichtelement in das zweite Dichtelement eingepresst, so dass ein Innendurchmesser des zweiten Dichtelements aufgeweitet und/oder ein Außendurchmesser des ersten Dichtelements zusammengedrückt wird. Hierdurch ist stets eine zuverlässige Abdichtung gewährleistet.

Gemäß einer weiteren Ausführungsform sind das erste Dichtelement und das zweite Dichtelement aus einem Silikonwerkstoff gefertigt.

Alternativ kann ein beliebig anderer elastisch verformbarer Kunststoff wie beispielsweise ein Polyurethanmaterial verwendet werden.

Gemäß einer weiteren Ausführungsform weist das erste Dichtelement eine umlaufende Ringnut auf, in die eine umlaufende Kante eines in dem Verblendelement vorgesehenen Durchbruchs eingreift.

Hierdurch wird das Eindringen von Flüssigkeit zwischen dem Dichtelement und dem Durchbruch verhindert. Vorzugsweise ist die umlaufende Kante in die Ringnut eingepresst, so dass zwischen dem Dichtelement und der umlaufenden Kante kein Luftspalt vorhanden ist.

Gemäß einer weiteren Ausführungsform weist das erste Dichtelement einen scheibenförmigen ersten Auflageabschnitt auf, der innenseitig an dem Verblendelement anliegt.

Hierdurch ist ein sicherer Halt des ersten Dichtelements an dem Verblendelement gewährleistet.

Gemäß einer weiteren Ausführungsform weist das erste Dichtelement einen scheibenförmigen zweiten Auflageabschnitt auf, der außenseitig an dem Verblendelement anliegt. Hierdurch wird das Eindringen von Flüssigkeit oder Kochgut durch den Durchbruch des Verblendelements zuverlässig verhindert. Das Verblendelement ist vorzugsweise zwischen den Auflageabschnitten positioniert.

Gemäß einer weiteren Ausführungsform ist ein Durchmesser des ersten Auflageabschnitts größer als ein Durchmesser des zweiten Auflageabschnitts.

Hierdurch wird die Montage der ersten Dichtelement an dem Verblendelement vereinfacht.

Gemäß einer weiteren Ausführungsform ist das erste Dichtelement entlang der Betätigungswelle axial stauchbar.

Insbesondere ist das erste Dichtelement entlang einer Mittel- oder Symmetrieachse des ersten Dichtelements und/oder des zweiten Dichtelements axial stauchbar. Insbesondere ist das erste Dichtelement in einer Stauchrichtung stauchbar. Die Stauchrichtung ist entlang der Betätigungswelle in Richtung des Verblendelements orientiert. Insbesondere ist das erste Dichtelement beim Verlagern des Bedienelements in Richtung des Verblendelements axial stauchbar. Vorzugsweise weist das erste Dichtelement einen rohrförmigen ersten Abschnitt oder Basisabschnitt, einen sich radial aus dem Basisabschnitt heraus erstreckenden Federabschnitt und einen zweiten rohrförmigen Abschnitt auf. Insbesondere ist der Basisabschnitt über den Federabschnitt mit dem zweiten Abschnitt verbunden. Beim Stauchen des ersten Dichtelements kann sich der Federabschnitt so verformen, dass sich der Basisabschnitt in Richtung des zweiten Abschnitts bewegt. Insbesondere kann der Basisabschnitt so verlagert werden, dass dieser innerhalb des zweiten Abschnitts angeordnet ist. Ein Durchmesser des Basisabschnitts ist vorzugsweise kleiner als ein Durchmesser des zweiten Abschnitts.

Gemäß einer weiteren Ausführungsform ist das zweite Dichtelement an das Bedienelement angespritzt oder angegossen.

Dass zweite Dichtelement weist vorzugsweise eine ringförmige Geometrie auf. Vorzugsweise ist das zweite Dichtelement an einen Betätigungsabschnitt des Bedienelements angespritzt oder angegossen. Beispielsweise kann der Betätigungsabschnitt ein Zweikomponentenkunststoffspritzgussbauteil sein. Hierdurch kann das zweite Dichtelement kostengünstig in hohen Stückzahlen hergestellt werden.

Gemäß einer weiteren Ausführungsform dichten das erste Dichtelement und das zweite Dichtelement radial gegeneinander ab.

Hierdurch ist bei einer Relativbewegung des zweiten Dichtelements relativ zu dem ersten Dichtelement stets die Dichtheit gewährleistet. Zusätzlich können das erste Dichtelement und das zweite Dichtelement axial gegeneinander abdichten.

Weiterhin wird eine Kochfeldanordnung mit einer derartigen Gaskochstelle vorgeschlagen.

Die Kochfeldanordnung kann Teil eines Haushaltsgeräts, beispielsweise eines Gasherds, sein.

Weitere mögliche Implementierungen der Gaskochstelle und/oder der Kochfeldanordnung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Gaskochstelle und/oder der Kochfeldanordnung hinzufügen.

Weitere vorteilhafte Ausgestaltungen und Aspekte der Gaskochstelle und/oder der Kochfeldanordnung sind Gegenstand der Unteransprüche sowie der im Folgenden beschriebenen Ausführungsbeispiele der Gaskochstelle und/oder der Kochfeldanordnung. Im Weiteren werden die Gaskochstelle und/oder die Kochfeldanordnung anhand von bevorzugten Ausführungsformen unter Bezugnahme auf die beigelegten Figuren näher erläutert.
- Fig. 1: zeigt eine schematische Aufsicht einer Ausführungsform einer Kochfeldanordnung;
- Fig. 2: zeigt eine schematische Seitenansicht eines Bedienelements der Kochfeldanordnung gemäß der Fig. 1;
- Fig. 3: zeigt eine schematische Schnittansicht des Bedienelements gemäß der Fig. 2;
- Fig. 4: zeigt eine schematische Schnittansicht einer Dichteinrichtung für das Bedienelement gemäß der Fig. 2;
- Fig. 5: zeigt eine weitere schematische Schnittansicht der Dichteinrichtung gemäß der Fig. 4; und
- Fig. 6: zeigt eine weitere schematische Schnittansicht der Dichteinrichtung gemäß der Fig. 4.

In den Figuren sind gleiche oder funktionsgleiche Elemente mit denselben Bezugszeichen versehen worden, sofern nichts anderes angegeben ist.

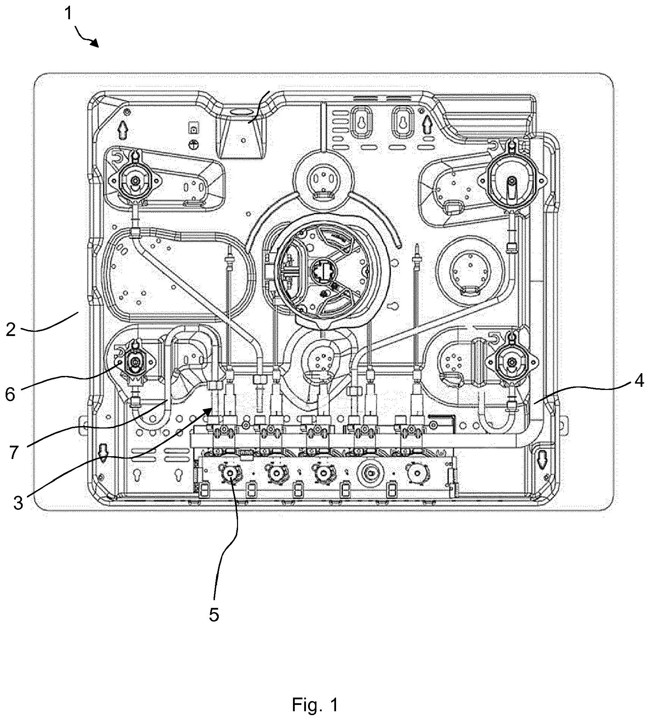

Die Fig. 1 zeigt in einer schematischen Aufsicht eine Ausführungsform einer Kochfeldanordnung 1. Die Kochfeldanordnung 1 kann Teil eines Haushaltsgargeräts sein. Die Kochfeldanordnung 1 umfasst eine Kochmuldenwanne 2 und zumindest eine Gaskochstelle 3. Die Anzahl der Gaskochstellen 3 ist beliebig, wie die Fig. 1 zeigt, kann die Kochfeldanordnung 1 fünf Gaskochstellen 3 aufweisen. Jede Gaskochstelle 3 umfasst ein an einer Hauptgasleitung 4 angebrachtes Gasventil 5, einen Gasbrenner 6 und eine das Gasventil 5 mit dem Gasbrenner 6 verbindende Gaszuleitung 7. Das Gasventil 5 ist vorzugsweise ein Gasregelventil. Das Gasventil 5 kann dazu eingerichtet sein, einen Brenngasstrom von der Hauptgasleitung 4 zu dem Gasbrenner 6 stufenlos oder gestuft zu regeln. Insbesondere kann das Gasventil 5 ein sogenanntes Step Valve sein. Das Gasventil 5 ist vorzugsweise an die Hauptgasleitung 4 angeklemmt.

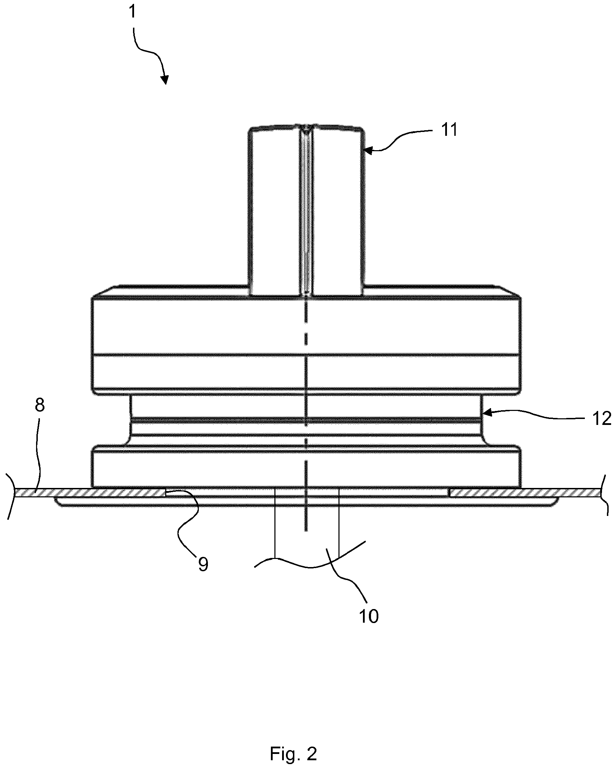

Die Kochfeldanordnung 1 weist weiterhin ein in der Fig. 2 in einer Schnittansicht gezeigtes Verblendelement 8 auf. Das Verblendelement 8 kann an der Kochmuldenwanne 2 befestigt sein. Das Verblendelement 8 kann in ein Gehäuse der Kochfeldanordnung 1 integriert sein. Vorzugsweise ist das Verblendelement 8 ein Blechbauteil. Das Verblendelement 8 kann einen Durchbruch 9 umfassen. Jedes Gasventil 5 weist eine in der Fig. 2 gezeigte Betätigungswelle 10 auf, die sich durch den Durchbruch 9 herauserstrecken kann. An der Betätigungswelle 10 ist drehfest ein Bedienelement 11 vorgesehen. Das Bedienelement 11 kann ein Drehknauf sein. Zwischen dem Bedienelement 11 und dem Verblendelement 8 ist eine Dichteinrichtung 12 angeordnet. Die Dichteinrichtung 12 ist dazu eingerichtet, ein Eindringen von Flüssigkeit oder Kochgut zwischen dem Bedienelement 11 und dem Durchbruch 9 zu unterbinden.

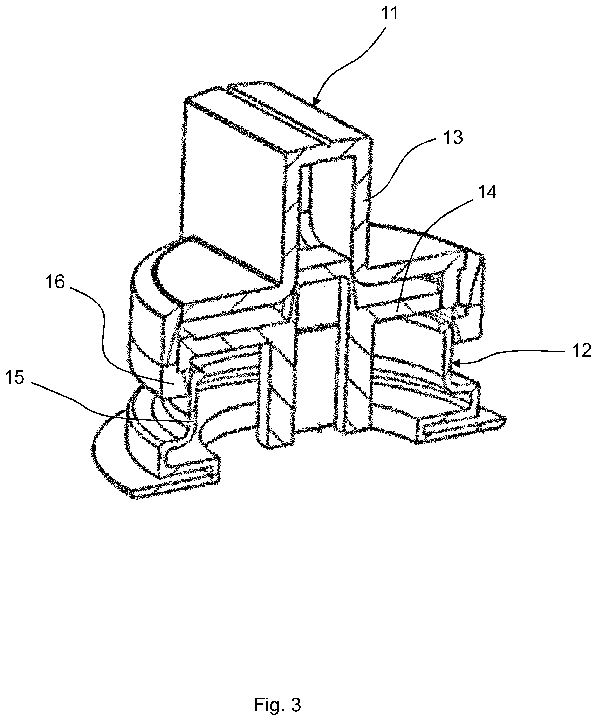

Die Fig. 3 zeigt das Bedienelement 11 mit der Dichteinrichtung 12 in einer schematischen Schnittansicht. Das Bedienelement 11 umfasst einen Bedienabschnitt 13, der von einem Benutzer der Kochfeldanordnung 1 mit zwei Fingern greifbar ist. Der Bedienabschnitt 13 kann beispielsweise ein Kunststoffspritzgussbauteil sein. Das Bedienelement 11 umfasst weiterhin einen Betätigungsabschnitt 14, der drehfest mit der Betätigungswelle 10 verbunden ist. Beispielsweise ist der Betätigungsabschnitt 14 mit Hilfe einer Nut- und Federverbindung mit der Betätigungswelle 10 drehfest verbunden. Der Bedienabschnitt 13 wiederum ist verdrehfest mit dem Betätigungsabschnitt 14 verbunden. Beispielsweise ist der Bedienabschnitt 13 mit dem Betätigungsabschnitt 14 verschnappt.

Die Dichteinrichtung 12 umfasst ein erstes Dichtelement 15, das mit dem Verblendelement 8 verbunden ist, und ein zweites Dichtelement 16, das mit dem Bedienelement 11, insbesondere mit dem Betätigungsabschnitt 14, verbunden ist. Wie die Fig. 3 zeigt, ist das erste Dichtelement 15 in das zweite Dichtelement 16 eingesteckt. Beim Verdrehen des Bedienelements 11 bewegt sich das zweite Dichtelement 16 relativ zu dem ersten Dichtelement 15. Das erste Dichtelement 15 ist an dem Verblendelement 8 verdrehfest angeordnet. Das zweite Dichtelement 16 ist an dem Betätigungsabschnitt 14 befestigt.

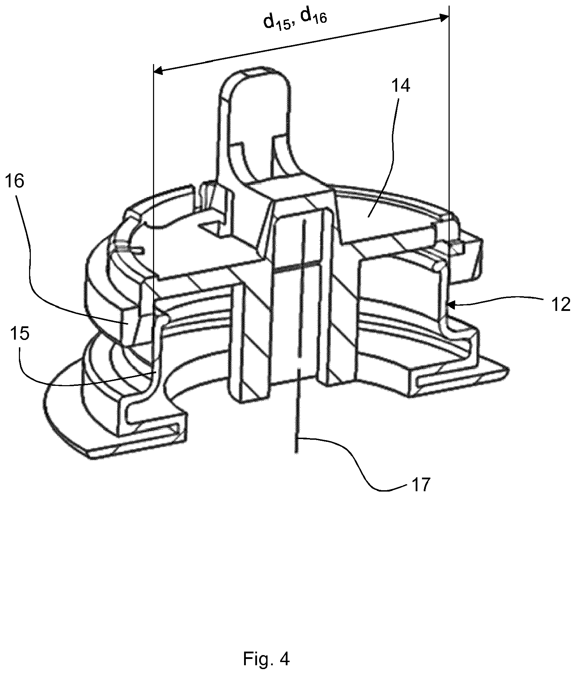

Die Fig. 4 zeigt den Betätigungsabschnitt 14 und die Dichteinrichtung 12 in einer weiteren schematischen Schnittansicht. Vorzugsweise ist das erste Dichtelement 15 so in das zweite Dichtelement 16 eingesteckt, dass das erste Dichtelement 15 das zweite Dichtelement 16 beim Verdrehen der beiden Dichtelemente 15, 16 relativ zueinander umfänglich berührt. Insbesondere schleift beim Drehen des Bedienelements 11 das zweite Dichtelement 16 an dem ersten Dichtelement 15. Vorzugsweise ist ein Außendurchmesser d₁₅ des ersten Dichtelements 15 geringfügig größer als ein Innendurchmesser d₁₆ des zweiten Dichtelements 16. Hierdurch ist stets eine radiale Abdichtung der Dichtelemente 15, 16 gegeneinander gewährleistet. Insbesondere ist das erste Dichtelement 15 in das zweite Dichtelement 16 eingepresst. Das erste Dichtelement 15 und das zweite Dichtelement 16 sind vorzugsweise elastisch verformbar. Insbesondere sind die Dichtelemente 15, 16 aus einem Silikonwerkstoff gefertigt. Die Dichtelemente 15, 16 sind vorzugsweise rotationssymmetrisch zu einer Symmetrie- oder Mittelachse 17 ausgebildet.

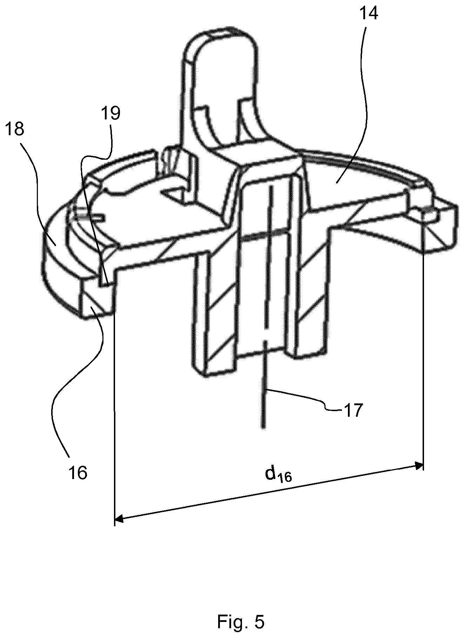

Die Fig. 5 zeigt den Betätigungsabschnitt 14 mit dem zweiten Dichtelement 16 in einer schematischen Schnittansicht. Das zweite Dichtelement 16 weist vorzugsweise eine Ringform mit einem rechteckigen Querschnitt auf. Das zweite Dichtelement 16 ist rotationssymmetrisch zu der Mittelachse 17 ausgebildet. Auch der Betätigungsabschnitt 14 ist vorzugsweise rotationssymmetrisch zu der Mittelachse 17 ausgebildet. Das zweite Dichtelement 16 ist vorzugsweise fest mit dem Bedienelement 11, insbesondere mit dem Betätigungsabschnitt 14, verbunden. Beispielsweise kann das zweite Dichtelement 16 an den Betätigungsabschnitt 14 angegossen oder angespritzt sein. Beispielsweise ist der Betätigungsabschnitt 14 ein Zweikomponentenspritzgussbauteil. Das zweite Dichtelement 16 weist an einer Oberseite 18 eine rechteckige Nut 19 auf, welche einen Kontaktbereich des zweiten Dichtelements 16 mit dem Betätigungsabschnitt 14 bildet. Der Kontaktbereich ist insbesondere L-förmig.

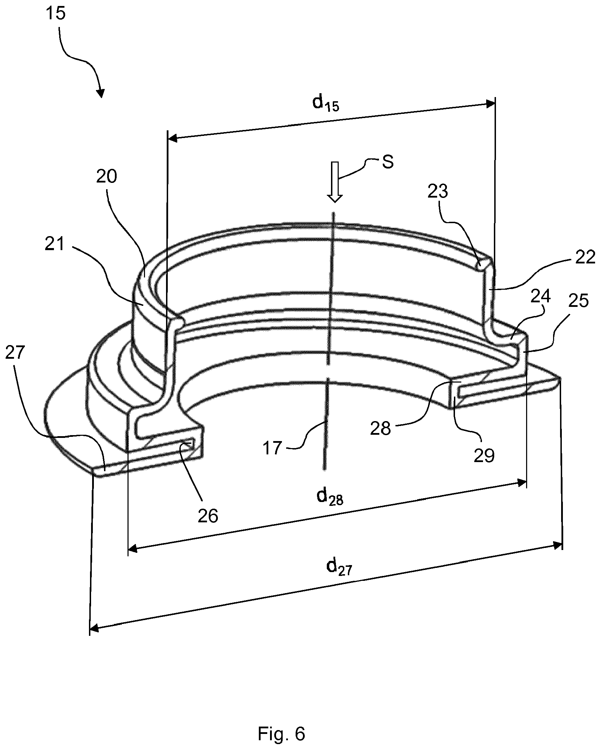

Die Fig. 6 zeigt das erste Dichtelement 15 in einer schematischen Schnittansicht. Das erste Dichtelement 15 ist rotationssymmetrisch zu der Mittelachse 17 ausgebildet. Das erste Dichtelement 15 ist elastisch verformbar. Vorzugsweise ist eine Oberseite 20 des ersten Dichtelements 15 mit einer Fase 21 versehen, so dass ein Einstecken oder Einschieben des ersten Dichtelements 15 in das zweite Dichtelement 16 erleichtert wird. Das erste Dichtelement 15 weist einen rohrförmigen ersten Abschnitt oder Basisabschnitt 22 auf, der an der Oberseite 20 mit einer in Richtung der Mittelachse 17 ragenden umlaufenden Versteifungsrippe 23 versteift ist. Der Basisabschnitt 22 geht in einen sich radial aus dem Basisabschnitt 22 heraus erstreckenden horizontal angeordneten Federabschnitt 24 über. An den Federabschnitt 24 schließt sich ein zweiter rohrförmiger Abschnitt 25 an. Das erste Dichtelement 15 ist entlang der Betätigungswelle 10, das heißt in Richtung der Mittelachse 17 in einer Stauchrichtung S stauchbar. Beim Stauchen des ersten Dichtelements 15 verformt sich der Federabschnitt 24, so dass sich der Basisabschnitt 22 in Richtung des Abschnitts 25 bewegt. Insbesondere kann der Basisabschnitt 22 so verlagert werden, dass dieser innerhalb des Abschnitts 25 angeordnet ist. Beim Verlagern des Bedienelements 11 entlang der Mittelachse 17, das heißt in Stauchrichtung S, wird das erste Dichtelement 15 gestaucht.

Das erste Dichtelement 15 weist weiterhin eine umlaufende Ringnut 26 auf, in die eine umlaufende Kante des in dem Verblendelement 8 vorgesehenen Durchbruchs 9 eingreift. Hierzu weist das erste Dichtelement 15 einen scheibenförmigen ersten Auflageabschnitt 27 auf, der innenseitig an dem Verblendelement 8 anliegt. Der erste Auflageabschnitt 27 weist einen Außendurchmesser d₂₇ auf. Weiterhin weist das erste Dichtelement 15 einen scheibenförmigen zweiten Auflageabschnitt 28 auf, der außenseitig an dem Verblendelement 8 anliegt. Der zweite Auflageabschnitt 28 ist mit dem Abschnitt 25 verbunden. Der zweite Auflageabschnitt 28 ist mit dem ersten Auflageabschnitt 27 über eine umlaufende Wand 29 verbunden. Der Durchmesser d₂₇ des ersten Auflageabschnitts 27 ist größer als ein Durchmesser d₂₈ des zweiten Auflageabschnitts 28. Mit Hilfe der Auflageabschnitte 27, 28 wird das Eindringen von Kochgut oder Flüssigkeit durch den Durchbruch 9 verhindert.

Das erste Dichtelement 15 und das zweite Dichtelement 16 dichten gegeneinander radial ab. Insbesondere wird das erste Dichtelement 15 so in das zweite Dichtelement 16 eingesteckt, dass der Durchmesser d₁₆ des zweiten Dichtelements 16 leicht aufgeweitet und/oder der Durchmesser d₁₅ des ersten Dichtelements 15 zusammengepresst wird. Hierdurch ist stets ein radialer Anpressdruck des ersten Dichtelements 15 an das zweite Dichtelement 16 gewährleistet. Ein Eindringen von Flüssigkeit oder Schmutz durch den Durchbruch 9 wird hierdurch zuverlässig verhindert.

### Verwendete Bezugszeichen:

- 1: Kochfeldanordnung
- 2: Kochmuldenwanne
- 3: Gaskochstelle
- 4: Hauptgasleitung
- 5: Gasventil
- 6: Gasbrenner
- 7: Gaszuleitung
- 8: Verblendelement
- 9: Durchbruch
- 10: Betätigungswelle
- 11: Bedienelement
- 12: Dichteinrichtung
- 13: Bedienabschnitt
- 14: Betätigungsabschnitt
- 15: Dichtelement
- 16: Dichtelement
- 17: Mittelachse
- 18: Oberseite
- 19: Nut
- 20: Oberseite
- 21: Fase
- 22: Basisabschnitt
- 23: Versteifungsrippe
- 24: Federabschnitt
- 25: Abschnitt
- 26: Ringnut
- 27: Auflageabschnitt
- 28: Auflageabschnitt
- 29: Wand

- d₁₅: Durchmesser
- d₁₅: Durchmesser
- S: Stauchrichtung

## Patentansprüche

1. Gaskochstelle (3) mit einem Gasventil (5), einem mit einer Betätigungswelle (10) des Gasventils (5) drehfest verbundenen Bedienelement (11) zum Betätigen des Gasventils (5) und einer Dichteinrichtung (12), die zwischen dem Bedienelement (11) und einem Verblendelement (8) der Gaskochstelle (3) angeordnet ist, wobei die Dichteinrichtung (12) ein erstes Dichtelement (15), das mit dem Verblendelement (8) verbunden ist, und ein zweites Dichtelement (16), das mit dem Bedienelement (11) verbunden ist, umfasst, wobei das erste Dichtelement (15) in das zweite Dichtelement (16) eingesteckt ist, wobei sich beim Verdrehen des Bedienelements (11) das zweite Dichtelement (16) relativ zu dem ersten Dichtelement (15) bewegt, **dadurch gekennzeichnet, dass** das erste Dichtelement (15) und das zweite Dichtelement (16) elastisch verformbar sind, und wobei das erste Dichtelement (15) so in das zweite Dichtelement (16) eingesteckt ist, dass das erste Dichtelement (15) das zweite Dichtelement (16) umfänglich berührt.

2. Gaskochstelle nach Anspruch 1, **dadurch gekennzeichnet, dass** das erste Dichtelement (15) und das zweite Dichtelement (16) aus einem Silikonwerkstoff gefertigt sind.

3. Gaskochstelle nach Anspruch 1 oder 2, **dadurch gekennzeichnet, dass** erste Dichtelement (15) eine umlaufende Ringnut (26) aufweist, in die eine umlaufende Kante eines in dem Verblendelement (8) vorgesehenen Durchbruchs (9) eingreift.

4. Gaskochstelle nach einem der Ansprüche 1 - 3, **dadurch gekennzeichnet, dass** das erste Dichtelement (15) einen scheibenförmigen ersten Auflageabschnitt (27) aufweist, der innenseitig an dem Verblendelement (8) anliegt.

5. Gaskochstelle nach Anspruch 4, **dadurch gekennzeichnet, dass** das erste Dichtelement (15) einen scheibenförmigen zweiten Auflageabschnitt (28) aufweist, der außenseitig an dem Verblendelement (8) anliegt.

6. Gaskochstelle nach Anspruch 5, **dadurch gekennzeichnet, dass** ein Durchmesser (d₂₇) des ersten Auflageabschnitts (27) größer als ein Durchmesser (d₂₈) des zweiten Auflageabschnitts (28) ist.

7. Gaskochstelle nach einem der Ansprüche 1 - 6, **dadurch gekennzeichnet, dass** das erste Dichtelement (15) entlang der Betätigungswelle (10) axial stauchbar ist.

8. Gaskochstelle nach einem der Ansprüche 1 - 7, **dadurch gekennzeichnet, dass** das zweite Dichtelement (16) an das Bedienelement (11) angespritzt oder angegossen ist.

9. Gaskochstelle nach einem der Ansprüche 1 - 8, **dadurch gekennzeichnet, dass** das erste Dichtelement (15) und das zweite Dichtelement (16) radial gegeneinander abdichten.

10. Kochfeldanordnung (1) mit einer Gaskochstelle (3) nach einem der Ansprüche 1 - 9.

## Claims

1. Gas hotplate (3) with a gas valve (5), a control element (11) connected in a torque-proof manner to an actuation shaft (10) of the gas valve (5) for actuating the gas valve (5) and a sealing facility (12), which is arranged between the control element (11) and a screening element (8) of the gas hotplate (3), wherein the sealing facility (12) comprises a first sealing element (15), which is connected to the screening element (8), and a second sealing element (16), which is connected to the control element (11), wherein the first sealing element (15) is inserted into the second sealing element (16), wherein when the control element (11) is rotated the second sealing element (16) moves relative to the first sealing element (15), **characterised in that** the first sealing element (15) and the second sealing element (16) can be deformed elastically, and wherein the first sealing element (15) is inserted into the second sealing element (16) so that the first sealing element (15) touches the second sealing element (16) circumferentially.

2. Gas hotplate according to claim 1, **characterised in that** the first sealing element (15) and the second sealing element (16) are manufactured from a silicon material.

3. Gas hotplate according to claim 1 or 2, **characterised in that** first sealing element (15) has a peripheral annular groove (26), into which a peripheral edge of an aperture (9) provided in the screening element (8) engages.

4. Gas hotplate according to one of claims 1 - 3, **characterised in that** the first sealing element (15) has a disc-shaped first support section (27), which rests on the inside of the screening element (8).

5. Gas hotplate according to claim 4, **characterised in that** the first sealing element (15) has a disc-shaped second support section (28), which rests on the outside of the screening element (8).

6. Gas hotplate according to claim 5, **characterised in that** a diameter (d₂₇) of the first support section (27) is larger than a diameter (d₂₈) of the second support section (28).

7. Gas hotplate according to one of claims 1 ― 6, **characterised in that** the first sealing element (15) can be compressed axially along the actuation shaft (10).

8. Gas hotplate according to one of claims 1 ― 7, **characterised in that** the second sealing element (16) is injected or cast onto the control element (11).

9. Gas hotplate according to one of claims 1 ― 8, **characterised in that** the first sealing element (15) and the second sealing element (16) are sealed radially from one another.

10. Hob arrangement (1) with a gas hotplate (3) according to one of claims 1 ― 9.

## Revendications

1. Table de cuisson au gaz (3) comprenant une vanne de gaz (5), un élément de commande (11) relié de manière solidaire en rotation à un arbre d'actionnement (10) de la vanne de gaz (5), destiné à actionner la vanne de gaz (5), et un dispositif d'étanchéité (12) qui est disposé entre l'élément de commande (11) et un élément de revêtement (8) de la table de cuisson au gaz (3), dans laquelle le dispositif d'étanchéité (12) comprend un premier élément d'étanchéité (15) qui est relié à l'élément de revêtement (8), et un second élément d'étanchéité (16) qui est relié à l'élément de commande (11), dans laquelle le premier élément d'étanchéité (15) est inséré dans le second élément d'étanchéité (16), dans laquelle, lors de la rotation de l'élément de commande (11), le second élément d'étanchéité (16) se déplace par rapport au premier élément d'étanchéité (15), **caractérisée en ce que** le premier élément d'étanchéité (15) et le second élément d'étanchéité (16) sont élastiquement déformables, et dans laquelle le premier élément d'étanchéité (15) est inséré dans le second élément d'étanchéité (16) de manière à ce que le premier élément d'étanchéité (15) soit en contact avec le second élément d'étanchéité (16) de manière circonférentielle.

2. Table de cuisson au gaz selon la revendication 1, **caractérisée en ce que** le premier élément d'étanchéité (15) et le second élément d'étanchéité (16) sont fabriqués dans une matière en silicone.

3. Table de cuisson au gaz selon la revendication 1 ou 2, **caractérisée en ce que** le premier élément d'étanchéité (15) présente une rainure annulaire circulaire (26) dans laquelle a prise une arête circulaire d'un passage (9) ménagé dans l'élément de revêtement (8).

4. Table de cuisson au gaz selon l'une quelconque des revendications 1 à 3, **caractérisée en ce que** le premier élément d'étanchéité (15) présente une première section d'appui (27) en forme de disque, laquelle est adjacente à l'élément de revêtement (8) côté intérieur.

5. Table de cuisson au gaz selon la revendication 4, **caractérisée en ce que** le premier élément d'étanchéité (15) présente une seconde section d'appui (28) en forme de disque, laquelle est adjacente à l'élément de revêtement (8) côté extérieur.

6. Table de cuisson au gaz selon la revendication 5, **caractérisée en ce qu'**un diamètre (d₂₇) de la première section d'appui (27) est supérieur à un diamètre (d₂₈) de la seconde section d'appui (28).

7. Table de cuisson au gaz selon l'une quelconque des revendications 1 à 6, **caractérisée en ce que** le premier élément d'étanchéité (15) peut être comprimé axialement le long de l'arbre d'actionnement (10).

8. Table de cuisson au gaz selon l'une quelconque des revendications 1 à 7, **caractérisée en ce que** le second élément d'étanchéité (16) est moulé par injection ou coulé sur l'élément de commande (11).

9. Table de cuisson au gaz selon l'une quelconque des revendications 1 à 8, **caractérisée en ce que** le premier élément d'étanchéité (15) et le second élément d'étanchéité (16) s'étanchéifient mutuellement de manière radiale.

10. Agencement de table de cuisson (1) comprenant une table de cuisson au gaz (3) selon l'une quelconque des revendications 1 à 9.
